# EUROPÄISCHE PATENTSCHRIFT

(11) **EP 2 979 541 B1**
(45) Veröffentlichungstag und Bekanntmachung des Hinweises auf die Patenterteilung: **21.12.2016**
(21) Anmeldenummer: 14178846.3
(22) Anmeldetag: 29.07.2014
(51) Int. Cl.: A01K 1/00

(54) **Mobiler Tierstall mit Kettenlaufwerk**
Mobile animal stall with chain drive
Écurie mobile équipée de chenilles

(43) Veröffentlichungstag der Anmeldung: 03.02.2016
(73) Patentinhaber: Wördekemper, Andreas, 33397 Rietberg (DE)
(72) Erfinder: Wördekemper, Andreas, 33397 Rietberg (DE)
(74) Vertreter: Wickord, Wiro

(56) Entgegenhaltungen:
- EP-A2- 2 702 866
- EP-B1- 1 119 241
- DE-U1-202012 101 514

## Beschreibung

Die Erfindung bezieht sich auf einen Mobilstall, insbesondere zur Unterbringung von Geflügel, Kälbern oder Schweinen, der auf einer Weidefläche bewegbar ist, und der einen Grundrahmen, darauf stehende Wände und ein Dach besitzt, wobei unter dem Grundrahmen wenigstens zwei gegenüberliegende Kufen angebracht sind.

Für Legehennen bevorzugen die Landwirte eine Freilandhaltung auf ihren Freiflächen. Dazu können mobile Tierställe eingesetzt werden. Durch ein Umsetzen des Tierstalls werden immer wieder andere Gebiete der Freiflächen genutzt und diese damit nicht übermäßig durch das Scharren der Tiere und den Kot belastet. Gewöhnlich wird der Tierstall dabei mittels einer Zugmaschine oder Traktor auf einer Fläche in Längsrichtung hin und her gezogen. Die Anforderungen an einen Stall für Legehennen sind in einer EU-Vorschrift festgelegt.

In der europäischen Patentanmeldung EP 2 702 866 A2 ist ein mobiler Tierstall mit einem Grundrahmen offenbart, unter dem Kufen angebracht sind, auf denen der Mobilstall auf der Weidefläche weiterbewegbar ist. Dazu sind an den Kufen außen Ösen vorhanden, an denen eine Zugmaschine mittels eines Seils oder Kette den Mobilstall ziehen und damit versetzen kann. Aus diesem Grunde ist obendrein eine Zugmaschine zum Versetzen des Mobilstalls auf der Weidefläche erforderlich.

In der europäischen Patentschrift EP 1 119 241 B1 ist ein verfahrbarer Geflügelstall beschrieben, der auf Rädern steht und an dem stirnseitig am Chassis eine als Deichsel ausgeführte Zugvorrichtung angebracht ist. Der Geflügelstall kann mittels einer an der Deichsel angekoppelten Zugmaschine wie beispielsweise einem Traktor auf einer Fläche in Längsrichtung verzogen werden. Somit ist eine zusätzliche Zugmaschine zum Versetzen des Geflügelstalls auf der Weidefläche erforderlich.

In der Gebrauchsmusterschrift DE 20 2007 010 333 U1 ist ein mobiler Hühnerstall offenbart, der auf Rädern verfahren werden kann. Der Hühnerstall steht auf Rädern, die an einer Steckachse angesteckt sind. Über eine Deichsel kann ein Schlepper angehängt und der Hühnerstall an seinen gewünschten Aufstellungsort verfahren werden. Dort werden die Räder von der Steckachse abgenommen und der Hühnerstall wird mit seinem unteren Rahmen auf dem Boden abgesetzt. Hierbei ist weiterhin ein Schlepper zum Versetzen des Hühnerstalls auf der Weidefläche erforderlich.

In der Gebrauchsmusterschrift DE 20 2012 101 514 U1 ist ein über Räder verfahrbarer Geflügelstall beschrieben, der ein unter dem Stall angeordnetes Fahrwerk aufweist. Dieses Fahrwerk besteht aus einem Rahmen mit einer darin angeordneten Hinterachse mit Rädern, sowie einer Anhängevorrichtung in Form einer Deichsel. Zusätzlich befindet sich ein drehbares und in der Höhe verstellbares Stützrad an der Deichsel. So kann der Geflügelstall beispielsweise als Anhänger an ein Zugfahrzeug, insbesondere Traktor, angehängt werden. Auch hier ist ein zusätzliches Zugfahrzeug zum Versetzen des Geflügelstalls auf der Weidefläche erforderlich.

In der Gebrauchsmusterschrift DE 20 2005 005 236 U1 ist eine mobile Weidehütte für Kühe und Pferde, also Großtiere, beschrieben, die auf Rädern verfahrbar ist. Dazu weist die Weidehütte ein Fahrwerk auf, das aus einer Querverbindung mit Steckachse und Laufrädern gebildet wird. Durch eine an der Weidehütte befestigten Deichsel kann die Weidehütte mit einem Zugfahrzeug bewegt werden. Darüber hinaus dient die Deichsel zur Abstützung der Weidehütte auf dem Boden. Demzufolge ist ein extra Zugfahrzeug zum Versetzen der Weidehütte auf der Weidefläche erforderlich.

Der Erfindung liegt die Aufgabe zugrunde, einen Mobilstall der eingangs genannten Art mit einem Fahrantrieb unter dem Grundrahmen herzustellen, der ein eigenangetriebenes und selbstfahrendes Bewegen des Mobilstalls auf der Weidefläche sowie eine Lenkung ohne gelenkte Achse ermöglicht.

Diese Aufgabe wird mit den Merkmalen des Anspruchs 1 gelöst.

Vorteilhafte Ausgestaltungen der Erfindung sind in den Unteransprüchen angegeben.

Der hier vorgestellte Mobilstall ist insbesondere für Geflügel und auch Kälber oder Schweine vorgesehen. Er ist aber auch geeignet, andere Tiere unterzubringen. Er ist dafür konzipiert, auf einer Weidefläche bei Bedarf bewegt zu werden und damit den Tieren immer wieder eine neue Weidefläche zu erschließen. Dazu sind unter dem Grundrahmen wenigstens zwei gegenüberliegende Kufen angebracht. Der Mobilstall ist auf einem Grundrahmen aufgebaut, auf dem Wände stehen. Nach oben ist er durch ein Dach abgeschlossen.

Dieser Mobilstall zeichnet sich dadurch aus, dass die Kufen unter dem Grundrahmen als Kettenlaufwerke ausgebildet sind, auf denen der Mobilstall eigenangetrieben und selbstfahrend auf der Weidefläche weiter bewegbar ist. Diese Kettenlaufwerke weisen jeweils einen Tragrahmen mit einer über wenigstens eine Antriebsstation und eine Spannstation geführte Kette auf. Die Kette umfasst eine Vielzahl von gelenkig miteinander verbundenen Kettengliedern und bildet eine geschlossene Schlaufe. Außerdem sind an den Kettengliedern Stollen quer zu den Tragrahmen angebracht. Allein durch das Kettenlaufwerk kann der Mobilstall einfach mit wenig Kraftaufwand, etwa mittels eines Traktors, über eine Wiese gezogen werden

Der Mobilstall wird dadurch selbstfahrend, dass die Kette in der Antriebsstation über eine Drehmomentübertragung durch einen Hydraulik- oder Elektromotor angetrieben wird. Die Drehmomentübertragung erfolgt beispielsweise über Reibschluss der Kettenglieder mit der Antriebswelle oder über ein gezahntes Kettenrad auf der Antriebswelle, das in die Kettenglieder eingreift. Der Motor ist entweder im gleichen Gehäuse der Antriebsstation untergebracht oder über eine Motorwelle direkt an der Antriebsstation angebaut, so dass sie eine konstruktive Einheit bilden.

Zusätzlich ist in der Antriebsstation eine Bremse integriert, die jederzeit ein Abbremsen der Fahrbewegung des Mobilstalls ermöglicht und ein Rollen des Mobilstalls im abschüssigen Gelände verhindert.

Die Kette wird an der Spannstation vorgespannt. Diese Vorspannung der Kette ist einerseits notwendig, um den Durchhang der Kette zwischen der Antriebsstation und der Spannstation zu begrenzen. Andererseits ist für die Einleitung der Antriebskräfte an der Antriebsstation eine Mindestvorspannung in der Kette erforderlich.

Vorteilhaft ist die Kette als eine Rundgliederkette ausgeführt, aus runden oder ovalen ineinander greifenden Ringen als Kettenglieder. Diese Rundgliederkette ist robust und langlebig sowie hitzebeständig.

Bei dem erfindungsgemäßen Mobilstall wird besonders vorteilhaft keine gelenkte Achse zur Lenkung des Mobilstalls eingesetzt. Vielmehr sind die Antriebsstationen der Kettenlaufwerke getrennt steuerbar, wodurch die Lenkbewegung des Mobilstalls aus unterschiedlichen Drehzahlen der angetriebenen Kettenlaufwerke resultiert. Beispielsweise wird durch ein einseitiges Abbremsen eines Kettenlaufwerks die Fahrtrichtung des Mobilstalls geändert. Hierdurch weist der Mobilstall beim Versetzen einen deutlich kleineren Wendekreis auf bzw. kann er nahezu auf einer Stelle wenden.

Das Bewegen oder Versetzen des Mobilstalles erfolgt spätestens dann, wenn die Weidefläche im Mobilstall mit der maximal verträglichen Kotmenge belastet ist.

Die Stollen sind in regelmäßigen Abständen an den Kettengliedern der Kette angeordnet. Vorteilhaft sind dabei die Stollen austauschbar oder auswechselbar. Dazu weisen die Stollen beispielsweise einen Lager- oder Verbindungsbolzen auf, der in einer Öffnung des Kettenglieds aufgenommen wird. Infolgedessen ist bei einem Verschleiß der Stollen nicht das ganze Kettenlaufwerk unbrauchbar, sondern die Stollen sind durch einzelne neue Stollen austauschbar.

Außerdem sind die Stollen mit einer plattenförmigen Stollenbasis ausgeführt, die je nach Beschaffenheit des Bodens gegen Stollen unterschiedlicher Höhe auswechselbar sind. Diese Stollen ermöglichen somit auch bei weichen und rutschigen Böden eine höhere Stabilität sowie einen optimalen Stollendruck für das Bewegen des Mobilstalls auf der Weidefläche.

Auch können die Stollen als flache Platten ausgeführt sein, die sich nicht stark in den Boden drücken.

Die Stollen sind während des Kettenumlaufs gleitend auf Schenkeln des Tragrahmens getragen, die der Tragrahmen obenseitig und untenseitig aufweist. Über die Schenkel des Tragrahmens wird die Last des Mobilstalls gleichmäßig auf die Weidefläche aufgebracht.

Weiterhin weist der Tragrahmen wenigstens eine Aufsattelkonsole auf, mit der das Kettenlaufwerk lösbar unter den Grundrahmen des Mobilstalls befestigt ist.

Das Dach des Mobilstalls ist als Rundbogendach mit gebogenen Fachwerkträgern ausgebildet. Durch diese Konstruktion ist es möglich, einen großen stützenfreien Raum zu bilden, in dem sich die Tiere aufhalten können. Es lassen sich Spannweiten von 8 m erreichen. Die Fachwerkträger sind so ausgelegt, dass sie auch große Schneelasten tragen können.

Die Fachwerkträger sind vorteilhaft als Parallelrundbogen ausgeführt. Dadurch wird eine besondere Tragfähigkeit und Steifigkeit des Daches erreicht. Die Rahmenecken der Fachwerkträger sind mit Querverstrebungen verstärkt und gewährleisten damit eine weitere Steifigkeit des gesamten Mobilstalles.

Die Wände des Mobilstalls sind vorteilhaft aus isolierenden Sandwichplatten aufgebaut. Da sich der Innenraum durch die Eigenwärme der Tiere temperiert, ist er auch bei kalter Witterung nutzbar.

In einer Wand des Mobilstalles ist eine Ausgangsöffnung vorgesehen, durch die die Tiere den Mobilstall verlassen und wieder hineinkommen können. So können sie sich auf der gesamten Weidefläche draußen bewegen und belasten diese damit nur wenig. Zur Nahrungsaufnahme und zum Eierlegen kommen die Tiere durch die Ausgangsöffnung in den Mobilstall zurück.

In einer Ausführungsform des Mobilstalls ist im Grundrahmen ein Rostenbereich mit einem durchlässigen Rost bedeckt und ein weiterer Bereich ist als Scharrbereich im Grundrahmen vom Rost frei gehalten. Dies ermöglicht den Tieren sich direkt auf der Weidefläche im Mobilstall zu bewegen. Dabei ist der Rost vorteilhaft im Grundrahmen so hoch über der Weidefläche angebracht, dass sich darunter nur Kot befindet und die Tiere nicht mit dem Kot in Berührung kommen. Der Scharrbereich wird zum artgerechten Scharren der Tiere genutzt.

In einer weiteren Ausführung ist in dem Mobilstall eine Voliere vorgesehen, die auf eigenständigen Kufen steht. Die Voliere ist mit dem Grundrahmen verbunden und wird mit diesem bewegt. In dem Mobilstallkönnen weitere Einrichtungsgegenstände, wie Tränken, Reuter, Legenester etc., eingebaut sein, die natürlich mit dem Mobilstall mitbewegt werden.

Konstruktive Einzelheiten vorteilhafter Ausgestaltungen des Mobilstalls, insbesondere für Geflügel, werden anhand der Figuren weiter beschrieben. Es zeigen:
Fig. 1 eine isometrische Ansicht eines Mobilstalles;
Fig. 2 einen senkrechten Querschnitt durch einen Mobilstall;
Fig. 3 einen senkrechten Querschnitt durch einen Mobilstall mit Voliere;
Fig. 4 einen waagerechten Querschnitt durch einen Mobilstall;
Fig. 5 eine Vorderansicht des Mobilstalls;
Fig. 6 eine isometrische Ansicht eines Kettenlaufwerks.

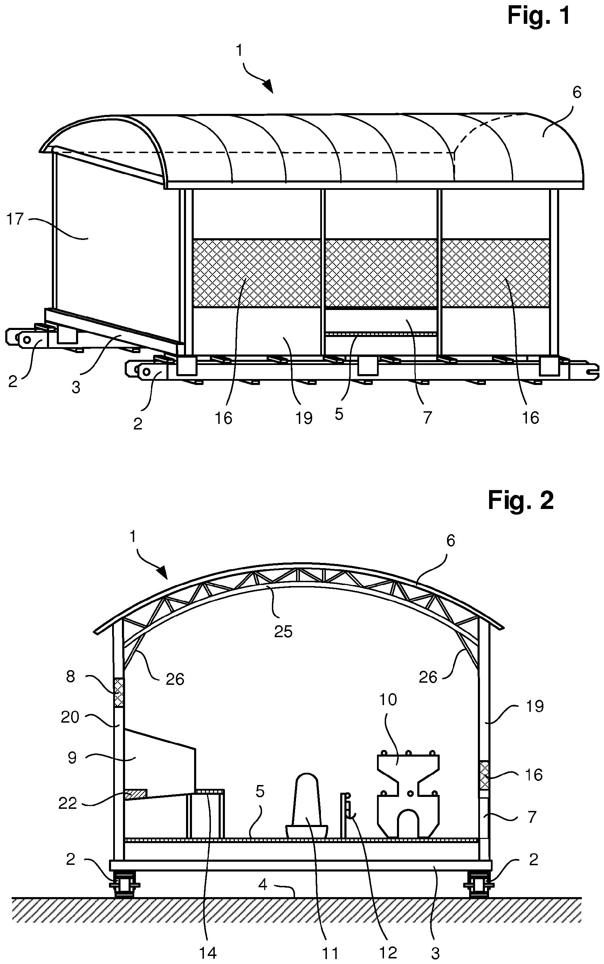

In Fig. 1 ist ein Mobilstall 1 dargestellt, dessen Grundrahmen 3 auf den Kettenlaufwerken 2 befestigt ist. Die Giebelwand 17 steht auf dem Grundrahmen 3. Das Dach 6 des Mobilstalles 1 ist als Rundbogendach ausgeführt. In der Seitenwand 19 befindet sich die Ausgangsöffnung 7, durch die die Tiere den Mobilstall 1 verlassen und in den Mobilstall 1 wieder hineinkommen können. Hier ist dargestellt, dass der Rost 5 in einer solchen Höhe angebracht ist, dass die Tiere sich auch unter diesem bewegen können. In der Seitenwand 19 sind auch hintere Lüftungsöffnungen 16 vorhanden, die durch Planen oder ähnliches verschließbar sind.

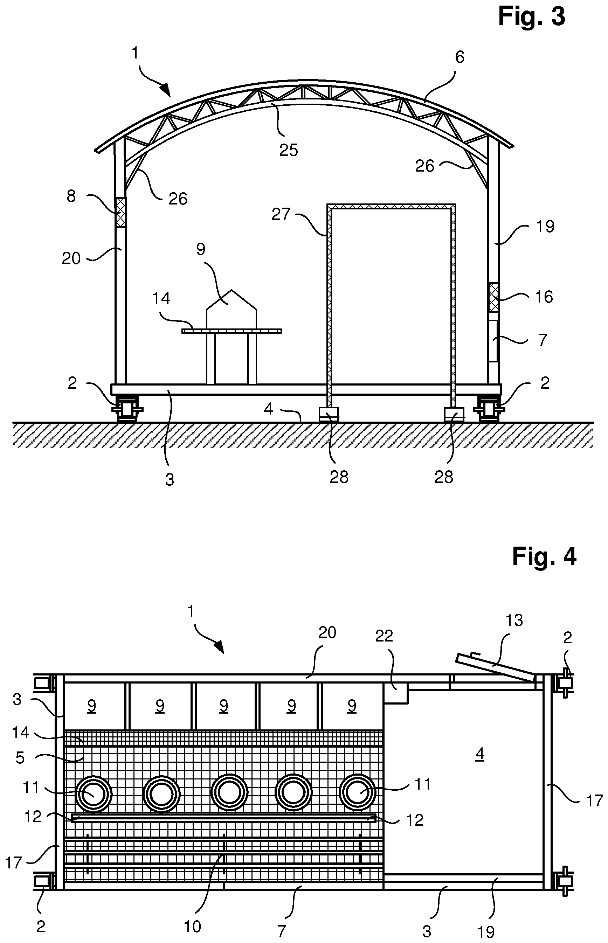

Die Fig. 2 und 3 zeigen einen vertikalen Querschnitt durch den Mobilstall 1, der mit seinem Grundrahmen 3 auf den Kettenlaufwerken 2 steht. Auf dem Grundrahmen 3 sind die Giebelwände 17, Vorderwand 20 und die Seitenwand 19 aufgestellt. Alle Wände sind aus isolierenden Sandwichplatten aufgebaut, damit auch im Winter die Wärme der Tiere in dem Mobilstall 1 gehalten werden kann und eine zusätzliche Heizung nicht erforderlich ist.

Das Dach 6 schließt den Mobilstall 1 nach oben hin ab. Es ist als Rundbogendach mit gebogenen Fachwerkträgern 25 ausgeführt. Die seitlichen Rahmenenden der Fachwerkträger 25 sind mit Querverstrebungen 26 verstärkt und bieten damit eine gute Stabilität des Mobilstalls 1.

In der Ausführung gemäß Fig. 2 ist auf dem Rost 5 der Reuter 10 mit längs verlaufenden Rohren aufgestellt, auf den sich die Tiere setzen können. Daneben befinden sich die Tränke 12 und die Futtertöpfe 11.

An der Vorderwand 20 sind die durch eine Verschlussplane dunkel gehaltenen Legenester 9 angebracht, vor denen sich die Anflugbank 14 befindet. In den Legenestern 9 rollen die Eier zu der quer durch die Legenester 9 eingebauten Eierentnahmevorrichtung 22.

In der Ausführung gemäß Fig. 3 ist eine Voliere 27 vorgesehen, die auf eigenständigen Kufen 28 geführt ist. Die Voliere 27 ist mit dem Grundrahmen 3 verbunden und wird mit diesem mitgeführt. Weiterhin sind hier Nester 9 mit ihrem Anflugbrett 14 auf dem Grundrahmen 3 vorgesehen.

In Fig. 4 ist eine Ausführungsform des Mobilstalls dargestellt, bei der im Innenraum des Mobilstalls 1 über dem Grundrahmen 3 der Rost 5 angebracht ist, unter dem sich der Scharrbereich 4 auf der Weidefläche befindet. In der Seitenwand 19 befindet sich die Ausgangsöffnung 7 und die hintere Lüftungsöffnung 16. In der Vorderwand 20 sind die Tür 13 und die eine vordere Lüftungsöffnung 8 eingebaut, die mit einer Schließvorrichtung, etwa einer Klappe oder einer Plane, verschließbar ist.

Auf dem Rost 5 ist der Reuter 10 mit längs verlaufenden Rohren aufgestellt, auf den sich die Tiere setzen können. Daneben befinden sich die Tränke 12 und die Futtertöpfe 11.

An der Vorderwand 20 sind die durch eine Verschlussplane dunkel gehaltenen Legenester 9 angebracht, vor denen sich die Anflugbank 14 befindet. In den Legenestern 9 rollen die Eier zu der quer durch die Legenester 9 eingebauten Eierentnahmevorrichtung 22.

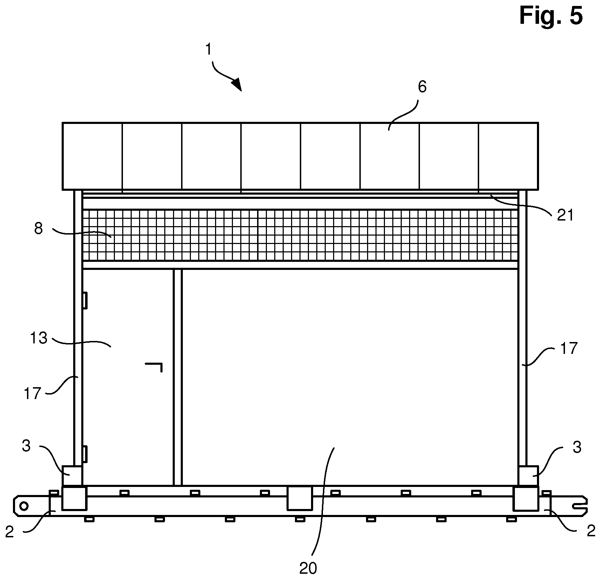

In der Vorderansicht gemäß Fig. 5 sind die Kettenlaufwerke 2 dargestellt, auf denen der Mobilstall 1 eigenangetrieben und selbstfahrend bewegbar ist. Der Grundrahmen 3 trägt die Giebelwände 17, auf denen sich das Dach 6 befindet. In der Vorderwand 20 sind die Tür 13 und die vordere Lüftungsöffnung 8 eingebaut. Die über die Schließvorrichtung 21 verschließbar ist.

Da das Dach 6 mit einem Dachüberstand versehen ist, kann auch Schlagregen nicht so leicht in den Mobilstall 1 eindringen.

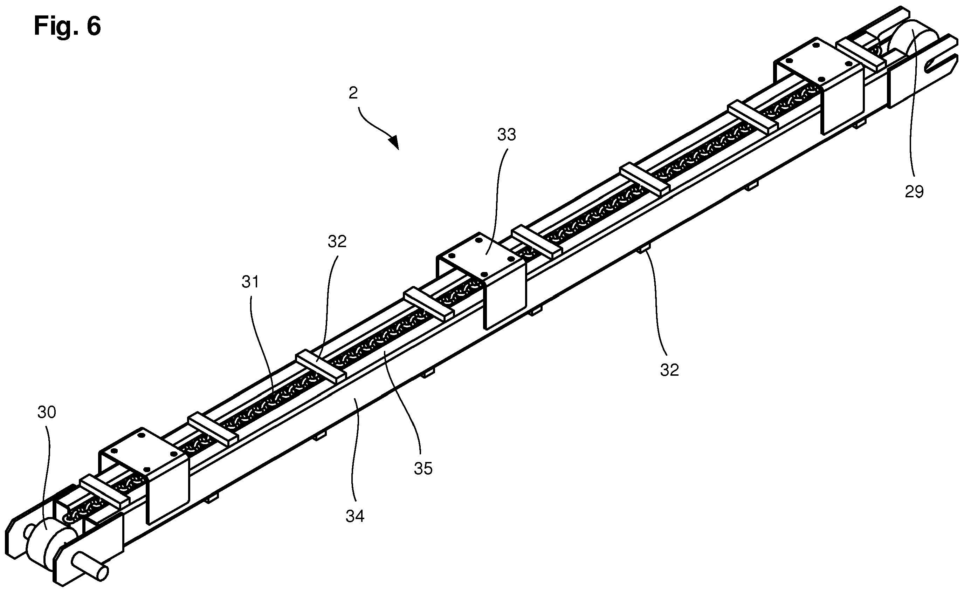

In Fig. 6 ist in Isometrieansicht ein Kettenlaufwerk 2 dargestellt, das einen Tragrahmen 34 mit einer eine geschlossene Schlaufe bildende Kette 31 aufweist. Die Kette 31 weist eine Vielzahl von gelenkig miteinander verbundenen Kettengliedern auf und ist über eine Antriebsstation 30 und eine Spannstation 29 geführt.

An den Kettengliedern sind in regelmäßigen Abständen Stollen 32 vorgesehen. Diese Stollen 32 sind austauschbar oder auswechselbar mit den Kettengliedern verbunden.

Die Kette 31 wird in der Antriebsstation 30 angetrieben und an der Spannstation 20 vorgespannt. Während des Kettenumlaufs sind die Stollen 32 gleitend auf den Schenkeln 35 des Tragrahmens 34 getragen. Diese Schenkel 35 sind obenseitig und untenseitig am Tragrahmen 34 ausgebildet.

Außerdem umfasst der Tragrahmen 34 drei Aufsattelkonsolen 33, mit denen das Kettenlaufwerk 2 lösbar unter den Grundrahmen 3 des Mobilstalls 1 befestigt ist.

### Bezugszeichen

- 1: Mobilstall
- 2: Kettenlaufwerk
- 3: Grundrahmen
- 4: Scharrbereich
- 5: Rost
- 6: Dach
- 7: Ausgangsöffnung
- 8: Vordere Lüftungsöffnung
- 9: Legenest
- 10: Reuter
- 11: Futtertopf
- 12: Tränke
- 13: Tür
- 14: Anflugbank
- 15: Rohre des Reuters
- 16: Hintere Lüftungsöffnung
- 17: Giebelwand
- 19: Seitenwand
- 20: Vorderwand
- 21: Schließvorrichtung für die vordere Lüftungsöffnung
- 22: Eierentnahme
- 25: Fachwerkträger
- 26: Querverstrebung
- 27: Volliere
- 28: Kufen der Volliere
- 29: Spannstation
- 30: Antriebsstation
- 31: Kette
- 32: Stollen
- 33: Aufsattelkonsole
- 34: Tragrahmen
- 35: Schenkel

## Patentansprüche

1. Mobilstall, insbesondere zur Unterbringung von Geflügel, Kälbern oder Schweinen, der auf einer Weidefläche bewegbar ist, und der einen Grundrahmen (3), darauf stehende Wände (17, 19, 20) und ein Dach (6) besitzt, wobei unter dem Grundrahmen (3) wenigstens zwei gegenüberliegende Kufen angebracht sind,
**dadurch gekennzeichnet,**
**dass** die Kufen unter dem Grundrahmen (3) als Kettenlaufwerke (2) ausgebildet sind, die jeweils einen Tragrahmen (34) mit einer eine geschlossene Schlaufe bildende und über wenigstens eine Antriebsstation (30) und eine Spannstation (29) geführte Kette (31) mit einer Vielzahl von gelenkig miteinander verbundenen Kettengliedern aufweisen, an denen Stollen (32) quer zu den Tragrahmen (34) angebracht sind.

2. Mobilstall nach Anspruch 1, **dadurch gekennzeichnet,**
**dass** die Kette (31) in der Antriebsstation (30) über Drehmomentübertragung durch einen Hydraulik- oder Elektromotor angetrieben wird.

3. Mobilstall nach Anspruch 2, **dadurch gekennzeichnet,**
**dass** die Antriebsstationen (30) getrennt steuerbar sind, so dass die Lenkbewegung des Mobilstalls (1) aus unterschiedlichen Drehzahlen der angetriebenen Kettenlaufwerke (2) resultiert.

4. Mobilstall nach Anspruch 1, **dadurch gekennzeichnet**
**dass** die Kette (31) an der Spannstation (29) vorgespannt wird, um den Durchhang der Kette (31) zwischen der Antriebsstation (30) und der Spannstation (29) zu begrenzen.

5. Mobilstall nach Anspruch 1, **dadurch gekennzeichnet,**
**dass** die Kette (31) als eine Rundgliederkette ausgeführt ist.

6. Mobilstall nach Anspruch 1, **dadurch gekennzeichnet,**
**dass** die Stollen (32) an den Kettengliedern austauschbar oder auswechselbar sind.

7. Mobilstall nach Anspruch 1, **dadurch gekennzeichnet,**
**dass** die Stollen (32) auf Schenkeln (35) des Tragrahmens (34) gleitend getragen sind.

8. Mobilstall nach Anspruch 6, **dadurch gekennzeichnet,**
**dass** die Stollen (32) mit einer plattenförmigen Stollenbasis ausgeführt sind, die an unterschiedliche Höhe erfordernde Böden anpassbar ist.

9. Mobilstall nach Anspruch 1, **dadurch gekennzeichnet,**
**dass** der Tragrahmen (34) wenigstens eine Aufsattelkonsole (33) aufweist, mit der das Kettenlaufwerk (2) lösbar unter den Grundrahmen (3) des Mobilstalls (1) befestigt ist.

10. Mobilstall nach Anspruch 1, **dadurch gekennzeichnet,**
**dass** das Dach (6) als Rundbogendach mit gebogenen Fachwerkträgern (25) ausgebildet ist und die Fachwerkträger (25) Parallelrundbogen sind.

11. Mobilstall nach Anspruch 1, **dadurch gekennzeichnet,**
**dass** die Wände (17, 19, 20) aus isolierenden Sandwichplatten aufgebaut sind.

12. Mobilstall nach Anspruch 1, **dadurch gekennzeichnet,**
**dass** in einer Seitenwand (19) eine Ausgangsöffnung (7) vorhanden ist, durch die die Tiere den Mobilstall (1) verlassen und wieder hineinkommen können.

13. Mobilstall nach Anspruch 1, **dadurch gekennzeichnet,**
**dass** in dem Grundrahmen (3) ein Rostenbereich mit einem durchlässigen Rost (5) und ein Scharrbereich (4), der vom Rost (5) freigehalten ist, vorgesehen sind.

## Claims

1. Mobile stall, in particular for accommodating poultry, calves or pigs, which is movable on a pasture area and which has a base frame (3), walls (17, 19, 20) standing thereon and a roof (6), at least two opposite runners being attached below the base frame (3), **characterised in that**
the runners below the base frame (3) are formed as crawler tracks (2) which each comprise a support frame (34) comprising a chain (31), which forms a closed loop, is guided over at least a drive station (30) and a tensioning station (29), and comprises a plurality of mutually articulated chain links to which studs (32) are attached transverse to the support frame (34).

2. Mobile stall according to claim 1, **characterised in that**
the chain (31) is driven in the drive station (30) by way of torque transfer by a hydraulic or electric motor.

3. Mobile stall according to claim 2, **characterised in that**
the drive stations (30) can be controlled separately, in such a way that the steering movement of the mobile stall (1) results from different rotational speeds of the driven crawler tracks (2).

4. Mobile stall according to claim 1, **characterised in that**
the chain (31) is pre-tensioned at the tensioning station (29) so as to limit the sag of the chain (31) between the drive station (30) and the tensioning station (29).

5. Mobile stall according to claim 1, **characterised in that**
the chain (31) is configured as a round-link chain.

6. Mobile stall according to claim 1, **characterised in that**
the studs (32) on the chain members can be exchanged or replaced.

7. Mobile stall according to claim 1, **characterised in that**
the studs (32) are supported so as to slide on limbs (35) of the support frame (34).

8. Mobile stall according to claim 6, **characterised in that**
the studs (32) are configured with a plate-shaped stud base which is adaptable to surfaces requiring a different height.

9. Mobile stall according to claim 1, **characterised in that**
the support frame (34) comprises at least one fifth-wheel bracket (33) which is detachably fixed to the crawler track (2) below the base frame (3) of the mobile stall (1).

10. Mobile stall according to claim 1, **characterised in that**
the roof (6) is configured as a round arch roof having arched trusses (25) and the trusses (25) are parallel round arches.

11. Mobile stall according to claim 1, **characterised in that**
the walls (17, 19, 20) are constructed from insulating sandwich plates.

12. Mobile stall according to claim 1, **characterised in that**
an outlet opening (7), through which the animals can exit the mobile stall (1) and enter it again, is provided in a side wall (19).

13. Mobile stall according to claim 1, **characterised in that**
a grating region, having a penetrable grating (5), and a scratching region (4), which is kept clear from the grate (5), are provided in the base frame (3).

## Revendications

1. Écurie mobile, notamment pour l'hébergement de volailles, veaux ou porcs, laquelle est déplaçable sur une aire de pâturage et laquelle possède un cadre de base (3), des parois (17, 19, 20) posées debout par-dessus et un toit (6), dans laquelle au moins deux patins opposés sont placés en dessous du cadre de base (3),
**caractérisée en ce que**
les patins en dessous du cadre de base (3) sont réalisés comme chenilles (2) qui présentent respectivement un cadre porteur (34) muni d'une chaîne (31) formant une boucle fermée et guidée par l'intermédiaire d'au moins une station d'entraînement (30) et une station tendeuse (29), comportant une pluralité de maillons reliés entre eux de manière articulée, au niveau desquels sont rapportés des crampons (32) transversalement au cadre porteur (34).

2. Écurie mobile selon la revendication 1, **caractérisée en ce**
**que** la chaîne (31) est entraînée dans la station d'entraînement (30) par l'intermédiaire de transmission de couple au moyen d'un moteur hydraulique ou électrique.

3. Écurie mobile selon la revendication 2, **caractérisée en ce**
**que** les stations d'entraînement (30) sont commandables séparément, de sorte que le mouvement de pilotage de l'écurie mobile (1) résulte de différentes vitesses de rotation des chenilles (2) entraînées.

4. Écurie mobile selon la revendication 1, **caractérisée en ce**
**que** la chaîne (31) est prétendue sur la station tendeuse (29) afin de limiter le fléchissement de la chaîne (31) entre la station d'entraînement (30) et la station tendeuse (29).

5. Écurie mobile selon la revendication 1, **caractérisée en ce**
**que** la chaîne (31) est réalisée en tant qu'une chaîne à maillons ronds.

6. Écurie mobile selon la revendication 1, **caractérisée en ce**
**que** les crampons (32) sur les maillons sont remplaçables ou interchangeables.

7. Écurie mobile selon la revendication 1, caractérisée en ce
les crampons (32) sont portés de manière coulissante sur des côtés (35) du cadre porteur (34).

8. Écurie mobile selon la revendication 6, caractérisée en ce
les crampons (32) sont réalisés avec une base de crampon en forme de plaque, qui est adaptable à des sols demandant une hauteur différente.

9. Écurie mobile selon la revendication 1, caractérisée en ce
le cadre porteur (34) présente au moins une console semi-portée (33) à l'aide de laquelle la chenille (2) est fixée de manière amovible sous le cadre de base (3) de l'écurie mobile (1).

10. Écurie mobile selon la revendication 1, **caractérisée en ce**
**que** le toit (6) est réalisé comme toit vouté avec des supports en treillis courbés (25) et en ce que les supports en treillis (25) sont des arcs parallèles de plein cintre.

11. Écurie mobile selon la revendication 1, **caractérisée en ce**
**que** les parois (17, 19, 20) sont constituées de panneaux sandwich isolés.

12. Écurie mobile selon la revendication 1, **caractérisée en ce**
**que** dans une paroi latérale (19), une ouverture de sortie (7) est présente, à travers laquelle les animaux peuvent sortir de l'écurie mobile (1) et de nouveau y rentrer.

13. Écurie mobile selon la revendication 1, **caractérisée en ce**
**que** dans le cadre de base (3) sont ménagées une partie en grille muni d'une grille perméable (5) et une zone de grattage (4) qui est exempte de grille (5).
